# EUROPÄISCHE PATENTANMELDUNG

(11) **EP 1 482 394 A2**
(43) Veröffentlichungstag der Anmeldung: **01.12.2004**
(21) Anmeldenummer: 04101549.6
(22) Anmeldetag: 15.04.2004
(51) Int. Cl.: G06F 1/00

(54) **Verfahren zur Steuerung des Zugriffs auf eine Ressource einer Applikation in einer Datenverarbeitungseinrichtung**

(30) Priorität: 28.05.2003 DE 10324189
(71) Anmelder: ROBERT BOSCH GMBH, 70442 Stuttgart (DE)
(72) Erfinder: Mann Pelz, Rodolfo, 30175, Hannover (DE); May, Thomas, 38302, Wolfenbuettel (DE); Hornburg, Bjoern, 31188, Holl (DE); Walossek, Erik, 06144, Halle (DE)

(57) **Zusammenfassung**

Die vorliegende Erfindung stellt ein Verfahren zur Steuerung des Zugriffs auf eine Ressource einer Applikation (12) in einer Datenverarbeitungseinrichtung (13) mit den Schritten: Anmelden einer Zugriffs-Schnittstelle (11) einer Zugriffsverwaltungs-Komponente (10) bei der Datenverarbeitungseinrichtung (13); Anfordern eines Zugriffs auf die Zugriffs-Schnittstelle (11) der Zugriffsverwaltungs-Komponente (10) bei der Datenverarbeitungseinrichtung (13) durch eine erste Applikation (12); Anmelden einer Ressource der ersten Applikation (12) bei der Zugriffsverwaltungs-Komponente (10); Betätigen einer zweiten Applikation (16) durch einen Nutzer (15), welcher einen Zugriff auf die Ressource der ersten Applikation (12) anfordert; Richten einer Zugriffsberechtigungsanfrage der ersten Applikation (12) über den Nutzer (15) an die Zugriffsverwaltungs- Komponente (11); und Gewähren des Zugriffs auf die Ressource der ersten Applikation (12) von der zweiten Applikation (16) aus bei Berechtigung des Nutzers (15).

## Beschreibung

### STAND DER TECHNIK

Die vorliegende Erfindung betrifft ein Verfahren zur Steuerung des Zugriffs auf eine Ressource einer Applikation in einer Datenverarbeitungseinrichtung, und insbesondere ein Verfahren zur Verwaltung von Personen und deren individuellen Zugriffsrechten in einem Fahrerinformationssystem eines Kraftfahrzeugs.

Die Steuerung von Zugriffsrechten in einer vernetzten Rechnerstruktur, z.B. eines Unternehmens, kann heutzutage auf mannigfaltige bekannte Weise bewerkstelligt werden. In einem mobilen Kraftfahrzeug sind jedoch aufgrund der gänzlich andersartigen Randbedingungen auch vollständig andersartige Strukturen und damit Anforderungen an die Steuerung von individuellen Zugriffsrechten unterschiedlicher Personen gestellt. Im nachfolgenden wird unter dem Begriff "Fahrerinformationssystem" eine Software-Plattform mit Applikationen verstanden, welche in einem Fahrzeug Informationen, beispielsweise über den Verkehr, Fahrtrouten, Nachrichten, Kommunikationsmöglichkeiten, wie Mobilfunk oder Internet, und Unterhaltung, wie Radio, CD, MP3, mit einer integrierten Steuerung zur Verfiigung stellen. Derzeit enthalten Fahrerinformationssysteme Software-Komponenten, die z.B. in einem monolithischen System eines einzelnen Herstellers betrieben werden, der die Software-Komponenten nach eigentümlichen Verfahren integriert. Die Software-Komponenten können auch auf verschiedenen Hardware-Komponenten mehrerer Hersteller laufen, die z.B. an ein Multimedia-Bus-System angeschlossen sind. Auch hier werden für die Integration des Systems jedoch eigentümliche Verfahren eingesetzt, da derzeit kein Standard für die Verwaltung von individuellen Zugriffsrechten einzelner Personen, insbesondere bei einem Fahrerinformationssystem, festgelegt ist.

Für eine JAVA-Laufzeitumgebung spezifiziert das Industrie-Konsortium OSGI (Open Services Gateway Initiative) einen Applikations-Framework, welcher sich zur Integration von Komponenten in einem Software-System eignet. Verschiedene Unternehmen nutzen diese OSGI-Plattform als Basis für die Entwicklung von Fahrerinformationssystemen. Es unterstützt die Verwaltung verschiedener Software-Komponenten und die Kommunikation zwischen einzelnen Komponenten. Darüber hinaus werden Schnittstellen für vorbestimmte Systemdienste vorgegeben. Systemkomponenten, welche fahrzeugspezifische Einschränkungen und Besonderheiten berücksichtigen, gerade was die Zugriffssteuerung anbetrifft, sind derzeit jedoch nicht bekannt.

### VORTEILE DER ERFINDUNG

Das erfindungsgemäße Verfahren zur Steuerung des Zugriffs auf eine Ressource einer Applikation in einer Datenverarbeitungseinrichtung mit den Merkmalen des Anspruchs 1 weist gegenüber den vorgenannten Ansätzen den Vorteil auf, dass ein System zwischen verschiedenen Anwendern unterscheiden kann und Applikationen eigene Zugriffsrechte definieren, welche bestimmen, wie die Anwender auf die Applikation zugreifen können. So wird ein Verfahren zur Zugriffssteuerung bereitgestellt, welches in einem komponentenbasierten Applikations-Framework bzw. -Plattform, beispielsweise in einem Fahrerinformationssystem auf der Grundlage der OSGI-Spezifikation, die Verwaltung von individuellen Zugriffsrechten von Personen, wie z.B. unterschiedlichen Fahrern oder Rollen, wie beispielsweise Fahrer oder Beifahrer, ermöglicht.

Die der vorliegenden Erfindung zugrunde liegende Idee besteht im wesentlichen darin, individuelle Zugriffsrechte in einem standardisierten Applikations-Framework bzw. einer Applikations-Plattform zu ermöglichen.

Gemäß einer bevorzugten Ausführungsform der vorliegenden Erfindung wird ein Verfahren zur Steuerung des Zugriffs auf eine Ressource einer Applikation in einer Datenverarbeitungseinrichtung mit den Schritten bereitgestellt: Anmelden einer Zugriffs-Schnittstelle einer Zugriffsverwaltungs-Komponente bei der Datenverarbeitungseinrichtung; Anfordern eines Zugriffs auf die Zugriffs-Schnittstelle der Zugriffsverwaltungs-Komponente bei der Datenverarbeitungseinrichtung durch eine erste Applikation; Anmelden einer Ressource der ersten Applikation bei der Zugriffsverwaltungs-Komponente; Betätigen einer zweiten Applikation durch einen Nutzer, welcher einen Zugriff auf die Ressource der ersten
Applikation anfordert; Richten einer Zugriffsberechtigungsanfrage der ersten Applikation über den Nutzer an die Zugriffsverwaltungs-Komponente; und Gewähren des Zugriffs auf die Ressource der ersten Applikation von der zweiten Applikation aus bei Berechtigung des Nutzers.

In den Unteransprüchen finden sich vorteilhafte Weiterbildungen und Ausgestaltungen des im Anspruch 1 angegebenen Verfahrens.

Gemäß einer bevorzugten Weiterbildung erfolgt nach dem Anmelden der Ressource der ersten Applikation ein Defmieren von Zugriffsrechten für die Ressource der ersten Applikation durch einen Administrator. Dies birgt den Vorteil, dass beispielsweise der Eigentümer eines Fahrzeugs die entsprechenden Berechtigungen im Fahrzeug konfigurieren kann, die beispielsweise bei einer Applikation, wie der Off-Board-Navigation, bei welcher Gebühren anfallen, nützlich ist, da diesen Service gegebenenfalls nur der Eigentümer nutzen soll und kein anderer Fahrer des Fahrzeugs.

Gemäß einer weiteren bevorzugten Weiterbildung werden durch einen oder mehrere vorbestimmte Nutzer zusätzliche Nutzer mit Zugriffsrechten eingerichtet und/oder die Zugriffsrechte für andere Nutzer festgelegt. Auf diese Weise kann der Nutzerkreis mit entsprechenden Zugriffsrechten vorteilhaft erweitert oder reduziert werden.

Gemäß einer weiteren bevorzugten Weiterbildung wird neben der Berechtigungsanfrage ebenfalls eine Prioritätsanfrage an die Zugriffsverwaltungs-Komponente gerichtet, um eine Reihenfolge mehrerer Nutzer gemäß ihrer Zugriffsrechte und/oder Prioritätsrechte festzulegen. Dadurch kann eine Priorisierung bestimmter Nutzer gewährleistet werden.

Gemäß einer weiteren bevorzugten Weiterbildung meldet die Zugriffsverwaltungs-Komponente die Zugriffs-Schnittstelle als Applikation in einem Applikations-Framework eines OSGI- und/oder JAVA-basierten Systems an. Von Vorteil hierbei ist die Nutzungsmöglichkeit der Zugriffs-Steuerung in einem standardisierten Applikations-Framework, wie einem OSGI-Framework.

Gemäß einer weiteren bevorzugten Weiterbildung umfasst die Klasse oder Schnittstelle der
Ressource der ersten Applikation einen Text, welcher die Ressource beschreibt und vorzugsweise eine Defmition, die eine Standard-Einstellung der Zugriffsrechte enthält. Ein einfacher Ressourcen-Aufbau der
Applikation kann dadurch vorteilhaft bereitgestellt werden.

Gemäß einer weiteren bevorzugten Weiterbildung werden mehrere Ressourcen vorzugsweise mehrerer Applikationen mit einer einzigen Anmeldung angemeldet. Daraus ergeht der Vorteil einer schnellen, rationellen Anmeldung einer Mehrzahl von Ressourcen einer oder mehrerer
Applikationen.

### ZEICHNUNGEN

Ein Ausführungsbeispiel der Erfindung ist in den Zeichnungen dargestellt und in der nachfolgenden Beschreibung näher erläutert.

Es zeigen:
Figur 1 ein schematisches Blockdiagramm zur Erläuterung von Komponenten gemäß einer Ausfiihrungsform der vorliegenden Erfindung;
Figur 2 ein schematisches Ablaufdiagramm zur Erläuterung der Funktionsweise eines Zugriffs-Steuerungsverfahrens gemäß einer Ausführungsform der vorliegenden Erfindung;

### BESCHREIBUNG DER AUSFÜHRUNGSBEISPIELE

In den Figuren bezeichnen gleiche Bezugszeichen gleiche oder funktionsgleiche Bestandteile.

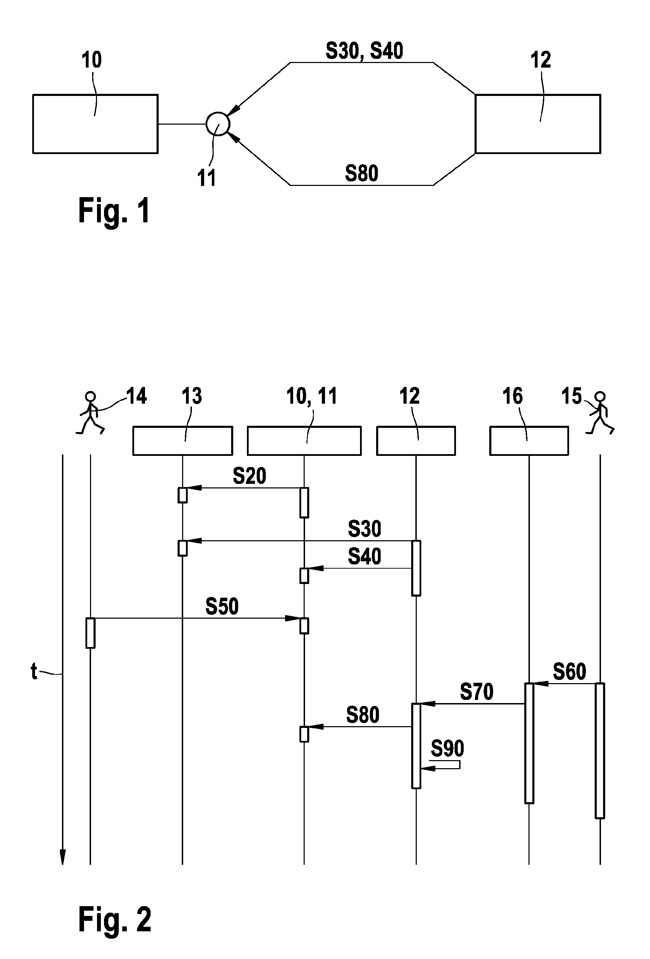

In Figur 1 sind schematisch Komponenten zur Erläuterung einer Ausführungsform der vorliegenden Erfindung dargestellt. Eine Zugriffsverwaltungs-Komponente 10, im nachfolgenden auch "Permission Manager" genannt, weist eine Zugriffs-Schnittstelle 11, im nachfolgenden auch "Ressource Registry" genannt, auf. Der Permission Manager 10 registriert für das Defmieren von Zugriffsrechten im zugrunde liegenden Framework (in Figur 1 nicht dargestellt) die Schnittstelle 11 Ressource Registry. Das zugrunde liegende Framework, vorzugsweise eine JAVA-Laufzeitumgebung, z.B. als OSGI-Framework ausgeführt, wird auf einer Datenverarbeitungseinrichtung (nicht dargestellt in Figur 1) betrieben. Eine erste Applikation 12, z.B. ein Bundle in einem OSGI-Framework, meldet seine Ressourcen an der Zugriffs-Schnittstelle 11 an (S30, S40). Für eine solche Applikation 12 können anwenderspezifische Zugriffsrechte definiert werden, welche von der Zugriffsverwaltungs-Komponente 10 in Verbindung mit der Zugriffs-Schnittstelle 11 verwaltet werden. Gemäß Figur 1 fragt die Applikation 12 im Schritt S80 über die Zugriffs-Schnittstelle 11 bei der Zugriffsverwaltungs-Komponente 10 die Berechtigung eines Anwenders ab. Das heißt, wenn auf die Ressourcen der Applikation 12 zugegriffen werden soll, fragt die Komponente 12 über die Zugriffs-Schnittstelle 11 ab, ob ein entsprechendes Zugriffsrecht gegeben ist. Dazu muss dem Bundle 12 eine Identifikation des Anwenders übergeben werden, wenn eine Ressource in Anspruch genommen werden soll.

In Figur 2 ist schematisch ein Ablaufdiagramm zur näheren Erläuterung einer Ausführungsform der vorliegenden Erfindung dargestellt. Mit t ist der Zeitverlauf bezeichnet. Gemäß Figur 2 meldet die Zugriffsverwaltungs-Komponente 10, d.h. der Permission Manager, in einem zugrunde liegenden Framework 13, welches auf einer Datenverarbeitungseinrichtung läuft, die Zugriffs-Schnittstelle 11 Ressource Registry im Schritt S20 an. Eine erste Applikation 12, z.B. ein Bundle, fordert daraufhin einen Zugriff auf die Zugriffs-Schnittstelle 11 Ressource Registry im Framework 13 im Schritt S30 an. Im Schritt S40 erfolgt dann ein Anmelden einer Ressource der ersten Applikation 12 bei der Zugriffsverwaltungs-Komponente 10 über die Zugriffs-Schnittstelle 11. Diese Schritte S20 bis S40 laufen unabhängig von einer Nutzer-Zugriffsanfrage ab. Im Schritt S50 definiert ein Administrator 14 Zugriffsrechte für einzelne Nutzer einer oder mehrerer Ressourcen der Applikation 12.

Beginnt nun ein Nutzer 15 eine zweite Applikation im Schritt S60, so versucht die zweite Applikation 16, auf eine oder mehrere Ressourcen in der ersten Applikation 12 im Schritt S70 zuzugreifen. Daraufhin fragt gemäß Schritt S80 die Applikation 12 über die Zugriffs-Schnittstelle 11 bei der Zugriffsverwaltungs-Komponente 10 die Berechtigung des Users ab, welche im Schritt S50 durch den Administrator 14 definiert wurden. Die erste Applikation 12 gewährt daraufhin den Zugriff der zweiten Applikation 16 auf eine oder mehrere Ressourcen der ersten Applikation 12 durch den User 15 bei gültiger Berechtigung. Unumgänglich ist dabei, dass die Schritte S60 bis S90 nach den Schritten S20 bis S40 und gegebenenfalls S50 abfolgen, da sonst noch gar keine Schnittstelle zur Anfrage oder auch Zugriffsrechte für entsprechende Ressourcen einer Applikation im Framework auf der Datenverarbeitungseinrichtung definiert sind.

Die Komponente Permission Manager 10 ermöglicht, dass Komponenten zur Laufzeit eigene Zugriffsrechte definieren können, welche im System, d.h. im Framework 13, zentral vom Permission Manager 10 verwaltet werden. Über den Permission Manager 10 können die Zugriffsrechte von berechtigten Anwendern 14 bzw. Administratoren für jeden Anwender 15 bzw. Nutzer eingestellt werden. Die Zugriffsrechte erlauben oder verbieten den Zugriff eines jeweiligen Anwenders 15 auf bestimmte Funktionen der Komponente 12. Darüber hinaus können für solche Zugriffe Prioritäten für verschiedene Anwender bzw. Nutzer 15 festgelegt werden.

In einem JAVA-, insbesondere OSGI-, basierten System meldet der Permission Manager 10 eine Schnittstelle RessourceAccess als Service im OSGI-Framework 13 an. Eine bevorzugte Implementierung lautet beispielsweise

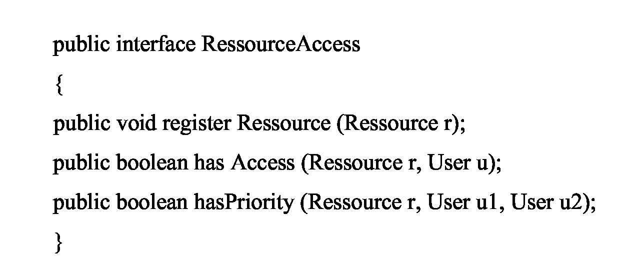

Dabei verwendet eine Applikation 12 die Methode register Ressource ( ), um eine Ressource beim Permission Manager 10 anzumelden. Der Permission Manager 10 ermöglicht es daraufhin berechtigten Anwendern, d.h. z.B. dem Administrator 14, Zugriffsrechte und Prioritäten aller Anwender 15 bezüglich dieser Ressourcen zu definieren. Die Klasse oder Schnittstelle Ressource enthält beispielsweise einen Text, der die Ressource beschreibt und eine Standard-Einstellung für die Zugriffsrechte aufweist. Alternativ dazu können auch mehrere Ressourcen mit einem einzigen Methodenaufruf angemeldet werden.

Die Methode "hasAccess" dient dazu, nachzuprüfen, ob ein Anwender, d.h. Nutzer 15, welcher durch das übergebene User-Objekt 16 beschrieben ist, auf die Ressource zugreifen darf, die durch das übergebene Ressource-Objekt 12 definiert ist. Alternativ können als Argumente auch vereinfachte Kennungen für eine Ressource einer Applikation 12 und/oder eines Anwenders 15 übergeben werden. Mit der Methode "hasPriority" kann eine Anwendung 12, 16 prüfen, ob der durch u1 definierte Anwender 15 bezüglich einer Ressource Vorrang vor dem mit u2 angegebenen Anwender (nicht dargestellt) hat. Der Permission Manager 10 ermöglicht es außerdem, berechtigten Anwendern 14, z.B. dem Eigentümer des Systems, neue Anwender 15 einzurichten und die Zugriffsrechte für andere Anwender 15 festzulegen (S50).

Obwohl die vorliegende Erfindung vorstehend anhand eines bevorzugten Ausführungsbeispiels beschrieben wurde, ist sie darauf nicht beschränkt, sondern auf vielfältige Weise modifizierbar. So ist das Verfahren zur Zugriffs-Steuerung auch auf andere standardisierte Frameworks übertragbar, z.B. unter Ergänzung der Spezifikationen von HAVi, DAB-JAVA, MHP, Microsoft.net oder einem Betriebssystem auf einer Datenverarbeitungseinrichtung. Außerdem ist der Einsatz auch in anderen Systemen als dem beschriebenen Fahrerinformationssystem in einem Fahrzeug möglich. Darüber hinaus können die genannten Applikationen 12, 16 auch nachträglich, z.B. über einen zentralen Server, oder zum Installieren von einem Datenträger, wie einer CD-ROM, im Framework auf der Datenverarbeitungseinrichtung angeboten werden.

## Patentansprüche

1. Verfahren zur Steuerung des Zugriffs auf eine Ressource einer Applikation (12) in einer Datenverarbeitungseinrichtung (13) mit den Schritten:
Anmelden einer Zugriffs-Schnittstelle (11) einer Zugriffsverwaltungs-Komponente (10) bei der Datenverarbeitungseinrichtung (13);
Anfordern eines Zugriffs auf die Zugriffs-Schnittstelle (11) der Zugriffsverwaltungs-Komponente (10) bei der Datenverarbeitungseinrichtung (13) durch eine erste Applikation (12);
Anmelden einer Ressource der ersten Applikation (12) bei der Zugriffsverwaltungs-Komponente (10);
Betätigen einer zweiten Applikation (16) durch einen Nutzer (15), welcher einen Zugriff auf die Ressource der ersten Applikation (12) anfordert;
Richten einer Zugriffsberechtigungsanfrage der ersten Applikation (12) über den Nutzer (15) an die Zugriffsverwaltungs-Komponente (11); und
Gewähren des Zugriffs auf die Ressource der ersten Applikation (12) von der zweiten Applikation (16) aus bei Berechtigung des Nutzers (15).

2. Verfahren nach Anspruch 1,
**dadurch gekennzeichnet,**
**dass** nach dem Anmelden der Ressource der ersten Applikation (12) ein Definieren von Zugriffsrechten für die Ressource der ersten Applikation (12) durch einen Administrator (14) erfolgt.

3. Verfahren nach Anspruch 1 oder 2,
**dadurch gekennzeichnet,**
**dass** durch einen oder mehrere vorbestimmte Nutzer (14, 15) zusätzliche Nutzer (15) mit Zugriffsrechten eingerichtet und/oder die Zugriffsrechte für andere Nutzer (15) festgelegt werden.

4. Verfahren nach Anspruch 1, 2 oder 3,
**dadurch gekennzeichnet,**
**dass** neben der Berechtigungsanfrage ebenfalls eine Prioritätsanfrage an die Zugriffsverwaltungs-Komponente (10) gerichtet wird, um eine Reihenfolge mehrerer Nutzer (15) gemäß ihrer Zugriffsrechte und/oder Prioritätsrechte festzulegen.

5. Verfahren nach einem der vorangehenden Ansprüche,
**dadurch gekennzeichnet,**
**dass** die Zugriffsverwaltungs-Komponente (10) die Zugriffs-Schnittstelle (11) als Applikation in einem Applikations-Framework eines OSGI- und/oder JAVA-basierten System anmeldet.

6. Verfahren nach einem der vorangehenden Ansprüche,
**dadurch gekennzeichnet,**
**dass** bei der Anmeldung der Ressource der ersten Applikation (12) ein Text, welcher die Ressource beschreibt, sowie eine Definition der Standard-Einstellung der Zugriffsrechte übergeben werden.

7. Verfahren nach einem der vorangehenden Ansprüche,
**dadurch gekennzeichnet,**
**dass** mehrere Ressourcen vorzugsweise mehrerer Applikationen (12, 16) mit einer einzigen Anmeldung angemeldet werden.
